# EUROPÄISCHE PATENTSCHRIFT

(11) **EP 1 532 016 B1**
(45) Veröffentlichungstag und Bekanntmachung des Hinweises auf die Patenterteilung: **28.05.2008**
(21) Anmeldenummer: 03790652.6
(22) Anmeldetag: 25.07.2003
(51) Int. Cl.: B60N 2/44, A47C 7/46

(54) **VERFAHREN ZUR BEFüLLUNG MINDESTENS ZWEIER REZIPIENTEN SOWIE PNEUMATISCHE SCHALTUNG ZUR DURCHFüHRUNG DES VERFAHRENS**
METHOD FOR FILLING AT LEAST TWO RECEPTACLES AND PNEUMATIC CIRCUIT FOR CARRYING OUT SAID METHOD
PROCEDE POUR REMPLIR AU MOINS DEUX CONTENANTS ET CIRCUIT PNEUMATIQUE PERMETTANT DE METTRE EN OEUVRE CE PROCEDE

(30) Priorität: 21.08.2002 DE 10238240
(43) Veröffentlichungstag der Anmeldung: 25.05.2005
(73) Patentinhaber: ROBERT BOSCH GMBH, 70442 Stuttgart (DE)
(72) Erfinder: BAUER, Bertram, 76571 Gaggenau (DE); MERZ, Harald, 76547 Sinzheim (DE); KONRAD, Daniel, Ann Arbor MI 48103 (US); PAESSLER, Wolfgang, 77855 Achern (DE)
(86) Internationale Anmeldenummer: PCT/DE2003/002508
(87) Internationale Veröffentlichungsnummer: WO 2004/020243

(56) Entgegenhaltungen:
- EP-A- 0 331 458
- DE-A- 19 717 174
- GB-A- 2 144 984
- GB-A- 2 182 398
- US-A- 4 655 505
- US-A- 5 029 939
- US-A- 5 135 282

## Beschreibung

Die Erfindung bezieht sich auf ein Verfahren zur alternierenden Beaufschlagung mindestens zweier Rezipienten eines pneumatischen Systems, beispielsweise eines Massage-Systems eines Kraftfahrzeugsitzes mit einem Druckmittelstrom. Ferner bezieht sich die Erfindung auf eine pneumatische Schaltung zur Durchführung dieses Verfahrens.

### Stand der Technik

Pneumatische Steuer- und Regelschaltungen werden in einer Vielzahl von technischen Anwendungen benutzt. So werden im Kraftfahrzeugbereich beispielsweise pneumatische Verfahren und entsprechende pneumatische Schaltungen benutzt, um beispielsweise die ansonsten standardisierte Kontur der Fahrzeugsitze äußeren Einflüssen bzw. den individuellen Wünschen des Kraftfahrzeugnutzers anzupassen.

Aus der US 4,655,505 ist ein pneumatisch kontrollierter Sitz für ein Fahrzeug bekannt, der es ermöglicht, die Druckverteilung des Sitzes für den Fahrer zu variieren. Diese Vorrichtung umfasst eine Vielzahl von in den Sitz des Fahrzeuges integrierten, flexiblen Luftkammern, die über eine entsprechende Anzahl von Verbindungsmitteln mit einer Luftpumpe und einem Drucksensor verbunden sind. Jedes Verbindungsmittel weist ein Ventil auf, das über elektronische Kontrollmittel, die das Signal des Drucksensors auswerten, angesteuert werden kann.

Die kombinierte, pneumatische und elektrische Schaltung dieser Vorrichtung gestattet es durch die Vielzahl der Ventile, definierte Drücke in den einzelnen Luftkammern des Sitzes aufzubauen und so, sowohl den Komfort des Sitzes zu erhöhen, als auch longitudinalen oder lateralen Beschleunigungen des Fahrzeuges Rechnung zu tragen.

Im Besonderen gestattet es die Vorrichtung der US 4,655,505 den Druck in jeder einzelnen Luftkammer zeitlich kontinuierlich zu variieren, so dass eine optimierte Druckverteilung einstellbar ist bzw. der Fahrer durch eine oszillierende Änderung der Druckverhältnisse in den Luftkammern einen Massageeffekt erfährt.

Zur Erzielung dieser Variation in den Druckverhältnissen der einzelnen Luftkammern des Sitzes der US 4,655,505 ist eine aufwendige elektrische Kontroll- und Steuereinheit mit entsprechender Elektronik und zumindest einem Drucksensor sowie eine zentrale Recheneinheit von Nöten.

Die GB-A-2144984 offenbart ein Verfahren und eine pneumatische Schaltung nach dem Oberbegriff der Ansprüche 1 und 10.

Aufgabe der vorliegenden Erfindung ist es, ein Verfahren bzw. eine pneumatische Schaltung zur alternierenden Beaufschlagung mindestens zweier Rezipienten eines pneumatischen Systems mit einem Druckmittelstrom zu realisieren, welches auf einfache aber zuverlässige Weise die hinreichende Befüllung der beteiligten Rezipienten ermöglicht.

Die Aufgabe wird gelöst durch das erfindungsgemäße Verfahren bzw. durch die erfindungsgemäße pneumatische Schaltung mit den Merkmalen des Anspruchs 1 bzw. des Anspruchs 10.

### Vorteile der Erfindung

Das erfindungsgemäße Verfahren zur alternierenden Beaufschlagung mindestens zweier Rezipienten eines pneumatischen Systems, insbesondere eines pneumatischen Massage-Systems für einen Kraftfahrzeugsitz, mit einem Druckmittelstrom bzw. die entsprechende pneumatische Schaltung sieht vor, dass zumindest ein als Rezipient dienendes erstes Luftkissen mit einem gasförmigen Arbeitsfluid gefüllt wird, während das Arbeitsfluid aus mindestens einem weiteren, zweiten Luftkissen aktiv abgesaugt wird. Das erfindungsgemäße Verfahren bzw. die pneumatische Schaltung zur Durchführung dieses Verfahrens verbessert die Wirkungsweise beispielsweise eines luftkammergetriebenen Massagesystems in einem Fahrzeugsitz, in dem die passive Entlüftung der Kissen gemäß dem Stand der Technik durch eine aktive Entlüftung ersetzt wird. Eine passive Entlüftung hängt stark von den Umgebungsbedingungen (beispielsweise Sitzaufbau, Fahrergewicht, Umgebungstemperatur, ...) ab. Bei einer aktiven Evakuierung der beteiligten Kissen wird der erzielbare Massageeffekt stärker spürbar. In einem Sitzmassagesystem, das aus mindestens zwei Luftkissen besteht, die in einem Fahrzeugsitz eingebaut sind, wird abwechselnd ein Kissen mit Luft bzw. einem anders gearteten, gasförmigen Arbeitsfluid gefüllt und in dem anderen Kissen wird die Luft aktiv abgesaugt. Durch diese Absaugung der Luft wird das entsprechende Kissen besser entleert und somit die Massagewirkung, die abhängig ist von der Druckdifferenz in den beteiligten Luftkissen, verstärkt.

Durch die in den weiteren Ansprüchen aufgeführten Maßnahmen und Merkmale sind vorteilhafte Verbesserungen und Weiterbildungen des in Anspruch 1 angegebenen Verfahrens, bzw. der in Anspruch 10 beschriebenen pneumatischen Schaltung möglich.

In vorteilhafter Weise kann der Druck in dem mindestens einen, zu leerenden Luftkissen zur Befüllung des mindestens einen zu befüllenden Luftkissens verwendet werden. Dabei sei die Bezeichnung "Luftkissen" nicht beschränkt auf die Verwendung von Luft als Arbeitsfluid des pneumatischen Systems. Auch der Begriff "Kissen" ist in einem weiteren Sinne zu verstehen und soll zumindest einen aufpumpbaren Rezipienten umfassen. Ein solches pneumatisches System lässt mit einer ganzen Reihe von gasförmigen Arbeitsfluiden realisieren. Durch die aktive Entleerung des einen Luftkissens kann der Druck in dem zu entleerenden Kissen zur Befüllung eines anderen Kissens genutzt werden, anstatt wie in den entsprechenden Systemen des Standes der Technik in die Umgebung zu entweichen. Dieser im Wesentlichen geschlossene Arbeitskreis bedeutet eine Verbesserung des Wirkungsgrades des pneumatischen Systems sowie eine Energieersparnis beim Betrieb eines solchen Systems.

In einer vorteilhaften Ausführungsform des erfindungsgemäßen Verfahrens wird die wechselseitige Befüllung der Luftkissen durch eine Drehrichtungsumkehr der das Arbeitsfluid fördernden Pumpe erreicht. Die Verwendung einer solchen Pumpe gestattet es, auf sehr einfache Weise, die beteiligten Luftkissen alternierend zu befüllen bzw. zu entleeren. Eine solche Pumpe wird in vorteilhafter Weise von einem Elektromotor getrieben, dessen Drehzahl und Drehrichtung beispielsweise über ein entsprechendes Steuergerät vorgebbar ist.

Auf diese Weise lässt sich ein pneumatisches System realisieren, bei dem der Enddruck in dem zu füllenden Rezipienten (Luftkissen), bzw. die Frequenz der alternierenden Beaufschlagung der beteiligten Rezipienten mit einem Druckmittelstrom, vorgebbar ist.

So kann beispielsweise der Enddruck in den zu füllenden Kissen, der die Härte des Fahrzeugsitzes bestimmt und die Stärke des Massageeffekts festlegt beispielsweise über entsprechende Bedienelemente manuell vorgegeben werden. Auf diese Weise ist es möglich, unterschiedlichen Nutzern bzw. unterschiedlichen Nutzbedingungen des Fahrzeuges bzw. des Fahrzeugsitzes Rechnung zu tragen. Neben dem gewünschten Enddruck in den Luftkissen kann beispielsweise auch die Frequenz mit der die Luftkissen befüllt und entleert werden, manuell eingestellt und somit der individuellen Fahrsituation angepasst werden.

In einem alternativen Ausführungsbeispiel des erfindungsgemäßen Verfahrens wird die Befüllung der Rezipienten durch ein Steuergerät geregelt, welches über diverse Detektoren Informationen über die Sitzbelegung erhält. So kann beispielsweise das Gewicht eines Fahrzeugnutzers, die Körpergröße oder aber auch die bereits verstrichene Fahrzeit über entsprechende Sensoren detektiert werden und an das Steuergerät übermittelt werden. Im Steuergerät können über entsprechend abgelegte Kennlinien dem Fahrertyp und der Fahrsituation angepasste Steuerprogramme zur Aktivierung der Luftkissen ausgewählt werden. So ist es beispielsweise möglich, einer sehr langen Fahrzeit Rechnung zu tragen, indem ein leichter Massageeffekt der Ermüdung des Fahrers entgegenwirkt. Auch ist es denkbar, den sogenannten Sekundenschlaf eines Fahrers zu detektieren und den Fahrer durch einen verstärkten Massageeffekt auf diese Situation aufmerksam zu machen und vor weiterem "Wegnicken" zu bewahren.

In einer Ausführungsform des erfindungsgemäßen Verfahrens wird der Enddruck in dem mindestens einen zu füllenden Rezipienten und/oder die Frequenz der alternierenden Beaufschlagung der mindestens zwei Rezipienten mit dem Arbeitsfluid durch eine Drosselung des Druckmittelstromes auf der Druckseite der Förderpumpe, insbesondere durch ein Drosselventil, gesteuert bzw. geregelt.

In einer alternativen Ausführungsform wird der Enddruck bzw. die Frequenz der Beaufschlagung durch Betätigung eines Bypasses zwischen der Saug- und Druckseite der Förderpumpe für das Arbeitsfluid gesteuert bzw. geregelt.

In vorteilhafter Weise weist die pneumatische Schaltung zur alternierenden Beaufschlagung mindestens zweier Rezipienten eines pneumatischen Systems mit einem Druckmittelstrom eine Förderpumpe und Verbindungsmittel auf, die derart miteinander verbunden sind, dass der mindestens eine, erste Rezipient über die Verbindungsmittel und die Förderpumpe mit dem mindestens einen, zweiten Rezipienten verbunden ist. Auf diese Weise ergibt sich ein im Wesentlichen geschlossenes Fördersystem in dem das Arbeitsmedium lediglich umgepumpt wird. Darüber hinaus kann die pneumatische Schaltung auch einen Rezipienten aufweisen, der als Vorratsbehältnis für das Arbeitsfluid dient.

Es kann beispielsweise die Ansaugseite der Förderpumpe mit einem ersten Rezipienten verbunden sein, während gleichzeitig die Druckseite der Förderpumpe mit einem zweiten Rezipienten verbunden ist. Durch Drehrichtungsumkehr der Förderpumpe lässt sich auf diese Weise ein einfaches Umpumpen des Arbeitsfluids realisieren.

In einem weiteren Ausführungsbeispiel der erfindungsgemäßen pneumatischen Schaltung kann auf der Ansaugseite der Förderpumpe ein den Druckmittelsrom steuerndes Bauelement mit mindestens einem Rezipienten verbunden sein. Eine entsprechende Ausgestaltung des steuernden Bauelementes ermöglicht es, dass zudem auch die Druckseite der Förderpumpe gleichzeitig mit demselben Bauelement verbunden ist.

In vorteilhafter Weise lässt sich ein solches Drucksteuermittel als ein pneumatisch getriebenes Stellglied realisieren, welches die alternierende Beaufschlagung der Rezipienten regelt. In diesem Falle ist die Verwendung einer einfachen Förderpumpe, ohne die Möglichkeit der Drehrichtungsumkehr möglich.

Als Drucksteuermittel kann in einfacher und daher vorteilhafter Weise auch ein Bauelement mit einem regelbaren bzw. schaltbaren Ventil genutzt werden.

In vorteilhafter Weise kann die Förderpumpe als Flügelzellenpumpe, insbesondere als Flügelzellenpumpe mit Mitteln zur Drehrichtungsumkehr ausgestaltet sein. In einem weiteren vorteilhaften Ausführungsbeispiel der pneumatischen Schaltung weisen die Verbindungsmittel zwischen der Förderpumpe und den Rezipienten ein Ausgangsventil auf, welches bei Erreichen einer bestimmten Druckgrenze auf der Saugseite der Förderpumpe, die Verbindungsleitung öffnet, um zusätzliches Arbeitsfluid dem System zuzuführen.

In vorteilhafter Weise lässt sich solch ein pneumatisches System in einen Fahrzeugsitz, insbesondere in den Sitz eines Kraftfahrzeugs einbauen, so dass in dem Fahrzeugsitz mit Hilfe des erfindungsgemäßen Verfahrens ein Massageeffekt realisierbar ist, der den Fahrzeugkomfort vergrößert sowie die Fahrsicherheit erhöht.

Mit dem erfindungsgemäßen Verfahren bzw. der erfindungsgemäßen pneumatischen Schaltung zur Durchführung dieses Verfahrens ist es möglich, die Wirkungsweise eines Massagesystems, insbesondere eines Massagesystems für einen Fahrzeugsitz zu verbessern, indem die passive Entlüftung der Rezipienten durch eine aktive Entlüftung ersetzt wird. So ist es insbesondere möglich ein Massagesystem zu realisieren, das weitgehend unabhängig ist von den Umgebungsbedingungen.

### Zeichnung

In der Zeichnung sind Ausführungsbeispiele der erfindungsgemäßen, pneumatischen Schaltung dargestellt, die in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten bzw. zu weiteren, sinnvollen Kombinationen zusammenfassen.

Es zeigen:
- Fig. 1: ein erstes Ausführungsbeispiel einer pneumatischen Schaltung zur Durchführung des erfindungsgemäßen Verfahrens,
- Fig. 2: ein zweites Ausführungsbeispiel einer erfindungsgemäßen pneumatischen Schaltung,
- Fig. 3: ein weiteres Ausführungsbeispiel einer erfindungsgemäßen pneumatischen Schaltung,
- Fig. 4: ein weiteres Ausführungsbeispiel einer erfindungsgemäßen pneumatischen Schaltung mit einer vergrößerten Anzahl von Rezipienten.

### Beschreibung der Ausführungsbeispiele

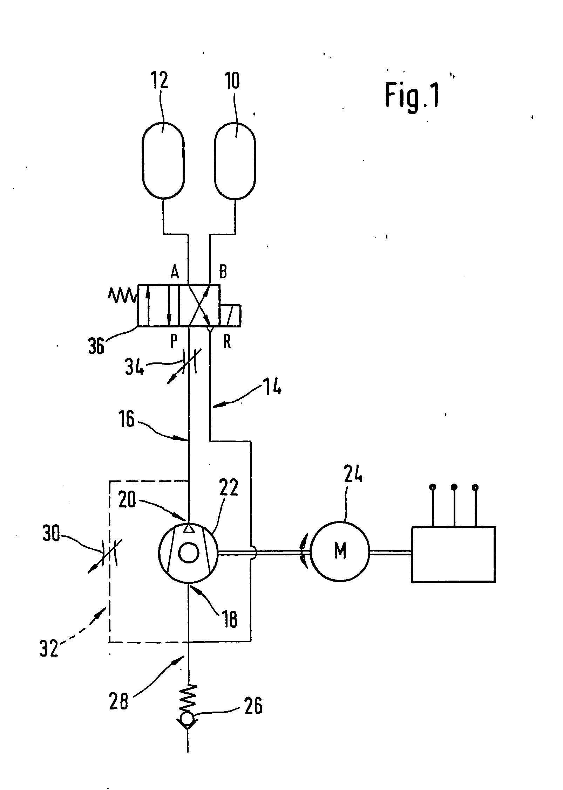

Fig. 1 zeigt ein erstes Ausführungsbeispiel einer pneumatischen Schaltung, wie sie beispielsweise in einem Fahrzeugsitz zur Erzielung eines Massageeffektes integriert sein kann. Ein solches System besteht aus zumindest zwei Rezipienten 10 bzw. 12, die beispielsweise in Form von aufpumpbaren Luftkissen ausgebildet sein können. Die beiden Rezipienten 10 bzw. 12 sind mit Verbindungsmitteln in Form von Schläuchen 14 bzw. 16 mit der Saugseite 18 bzw. der Druckseite 20 einer Förderpumpe 22 verbunden. Die Pumpe 22 wird von einem Elektromotor 24 angetrieben, der über ein nicht weiter dargestelltes Steuergerät geregelt wird. Auf der Saugseite der Pumpe 22 befindet sich zudem ein Ausgangsventil 26, welches unter normalen Betriebsbedingungen verschlossen ist. Bei Erreichung einer bestimmten Druckgrenze auf der Saugseite der Förderpumpe 22 wird dieses Ausgangsventil geöffnet und über die Verbindungsleitung 28 dem System zusätzlich Luft zugeführt.

Die Förderleistung der Pumpe 22 kann durch ein regelbares Ventil 30, welches in einem Bypass 32 zwischen der Saugseite 18 und der Druckseite 20 der Förderpumpe 22 angeordnet ist, geregelt werden. Dazu kann das regelbare Ventil 30 beispielsweise eine Steuerung besitzen, die mit dem zentralen Steuergerät der pneumatischen Schaltung, welches auch den Elektromotor 24 der Förderpumpe 22 regelt, verbunden ist.

Alternativ oder zusätzlich kann ein Regelventil 34 auf der Druckseite der Förderpumpe angeordnet sein. Durch eine entsprechende Regelung kann der Druck in den Kissen und die Frequenz der Beaufschlagung der Kissen mit dem Arbeitsfluid beeinflusst werden.

In dem vorliegenden Ausführungsbeispiel der Fig. 1 wird die alternierende Beaufschlagung der Luftkissen mit einem Druckmittelstrom durch ein Stellglied 36 realisiert, welches es ermöglicht, abhängig von der Stellung des Stellgliedes die Druckseite 20 der Förderpumpe 22 entweder mit dem Rezipienten 12 oder alternativer Weise mit dem Rezipienten 10 zu verbinden. Der verbleibende zweite Rezipient ist dann jeweils entsprechend mit der Saugseite 18 der Förderpumpe 22 verbunden. Wie bereits beschrieben, zeigt die Fig. 1 eine Stellung des Stellgliedes 36, die den Rezipienten 10 mit der Druckseite 20 und den Rezipienten 12 mit der Saugseite 18 der Förderpumpe 22 verbindet. Bei eingeschalteter Förderpumpe 22 wird daher im Ausführungsbeispiel der Fig. 1 der Rezipient 10 mit dem Druckmittelstrom des Arbeitsfluids beaufschlagt während gleichzeitig das Arbeitsfluid aus dem Rezipienten 12 aktiv durch die Förderpumpe 22 abgepumpt wird.

In den Rezipienten, den Verbindungsmitteln bzw. auch in der Förderpumpe können sich Drucksensoren befinden, die den Druck im zu befüllenden Rezipienten überwachen. Auch kann das Steuergerät beispielsweise der Förderpumpe 22 eine bestimmte Förderzeit vorgeben, die bei bekannter Förderleistung dieser Pumpe den Enddruck in dem zu befüllenden Rezipienten bestimmt. Darüber hinaus kann dieser Enddruck beispielsweise auch über die Regelventile 30 bzw. 34 eingeregelt werden. Wechselt das Stellglied 36 seine Position, so wird der befüllte Rezipient 10 nun mit der Saugseite der Förderpumpe 22 verbunden, so dass dieser Rezipient nun aktiv entleert wird und das Arbeitsfluid durch die Förderpumpe 22 in den nun zu befüllenden Rezpienten 12 umgepumpt wird.

Durch die Vorgabe der Wechselfrequenz für die Stellung des Stellgliedes 36 kann so beispielsweise die Frequenz der alternierenden Beaufschlagung der zwei Rezipienten mit dem Arbeitsfluid vorgegeben werden. Das Stellglied 36 kann beispielsweise mechanisch oder aber auch pneumatisch betrieben werden.

Das in Fig. 1 dargestellte pneumatische System kann in vorteilhafter Weise in den Fahrzeugsitz eines Kraftfahrzeuges integriert werden, wobei dieses System nicht auf die Verwendung lediglich zweier Rezipienten beschränkt ist. Vielmehr soll mit dem Ausführungsbeispiel gemäß Fig. 1 der prinzipielle Ablauf des erfindungsgemäßen Verfahrens und der grundlegende Aufbau der zugehörigen erfindungsgemäßen pneumatischen Schaltung erklärt werden. Ein reales pneumatisches System beispielsweise zur Erzeugung eines Massageeffektes in einem Fahrzeugsitz mag über eine Vielzahl zu beaufschlagender Luftkissen verfügen. Auch muss die Förderpumpe bzw. der die Pumpe antreibende Motor nicht in unmittelbarer Nähe der Rezipienten angebracht sein, sondern kann, zur Vermeidung von übermäßiger Geräuschentwicklung über entsprechende Verbindungsmittel in einiger Entfernung zu den Rezipienten und damit zu den Fahrzeuginsassen untergebracht sein.

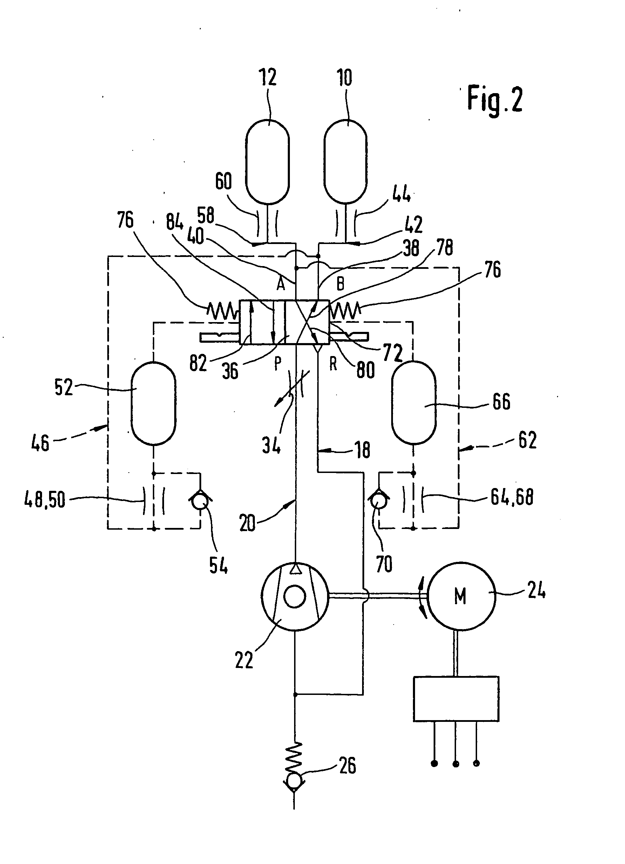

Fig. 2 zeigt ein Ausführungsbeispiel für eine erfindungsgemäße pneumatische Schaltung, bei der das Stellglied 36 ein pneumatisches Stellglied ist. Die in Fig. 2 dargestellte pneumatische Schaltung zeigt ein Stellglied 36, welches die Druckseite 20 der Förderpumpe 22 mit einem ersten Ausgangskanal 38 und gleichzeitig einen zweiten Ausgangskanal 40 mit der Saugseite 18 der Förderpumpe 22 verbindet. Dem Stellglied 36 auf der Druckseite der Förderpumpe 20 vorgeschaltet ist ein Regelventil 34. Der Ausgangskanal 38 des Stellgliedes 36 ist über Verbindungsmittel 42 mit dem Rezipienten 10 verbunden. Das Verbindungsmittel 42 weist u. a. eine Drossel 44 auf, mit der der Durchfluss durch das Verbindungsmittel 42 in gewünschter Weise eingestellt werden kann. Vom Verbindungsmittel 42 zwischen dem Stellglied 36 und dem Rezipienten 10 zweigt ein weiteres Verbindungsmittel 46 ab, das über ein Verzögerungsglied 48, welches in dem vorliegenden Ausführungsbeispiel durch eine Drossel 50 realisiert ist, zu einem Reservoir 52 führt, welches über ein Rückschlagventil 54 und das Verbindungsmittel 46 entleert werden kann. Das Reservoir 52 wiederum ist drucktechnisch über eine Vorrichtung 56 mit dem Stellglied 36 gekoppelt.

Der zweite Ausgangskanal 40 des Stellgliedes 36 ist zum Einen über Verbindungsmittel 58 und eine Drossel 60 mit dem zweiten Rezipienten 12 verbunden und andererseits über Verbindungsmittel 62 und eine Drossel 64 an ein zweites Reservoir 66 gekoppelt. Die Zuleitung zum Reservoir 66 weist ebenso ein Verzögerungsglied 68 und ein Rückschlagventil 70 für die Entlüftung des Reservoirs auf. Das Reservoir 66 ist, wie das Reservoir 52, über eine Vorrichtung 72 mit dem Stellglied 36 verbunden, dieses jedoch auf der entgegengesetzten Seite.

Das Stellglied 36 weist in seinem Inneren durchgehende Kanäle auf, die die jeweilige Verbindung zwischen der Druckseite 20 mit einem der Verbindungsmittel 42 bzw. 58, sowie eine Verbindung der Saugseite 18 der Förderpumpe 22 mit dem jeweiligen, nicht mit der Druckseite verbundenen Verbindungsmittel 42 bzw. 58 herstellt. Die Beweglichkeit des Stellgliedes 36 wird durch eine Kontereinrichtung 76, die in der Fig. 2 schematisch als elastische Feder dargestellt ist, reguliert.

Im Folgenden soll die Funktionsweise der erfindungsgemäßen pneumatischen Schaltung nach dem Ausführungsbeispiel der Fig. 2 näher beschrieben werden. Wird die Druckseite 20 der erfindungsgemäßen Schaltung mit einem Arbeitsfluid, wie beispielsweise Luft beaufschlagt, so gelangt das Druckmittel durch einen Kanal 78 und die Drossel 44 in den Rezipienten 10, der beispielsweise als ein elastisches Luftkissen ausgeformt sein kann. Das Luftkissen 10 wird sich mit dem Druckmittel füllen und entsprechend aufgeblasen werden. Der Rezipient 12 ist zu diesem Zeitpunkt über einen Kanal 80 mit der Saugseite der Förderpumpe 22 verbunden, so dass das im Rezipienten 12 vorhandene Arbeitsfluid über die Verbindungsleitungen und die Förderpumpe 22 dem Rezipienten 10 zugeführt wird. Während das Luftkissen 10 aufgeblasen wird, wird ein Teil des Druckmittelstromes über das Verbindungsmittel 46 und die entsprechend eingestellte Drossel 48 dem Rezipienten 52, der als Arbeitsraum dient, zugeführt. Die genaue Einstellung der Drossel 50 bestimmt damit die Zeit, die notwendig ist, um den Arbeitsraum 52 zu füllen. Der Arbeitsraum 52 ist beispielsweise über eine elastische Membran oder eine andere Vorrichtung 56 mit dem Stellglied 36 verbunden. Wenn nun der Druck im Arbeitsraum 52 ansteigt, und sich die Membran bzw. die entsprechende Vorrichtung 56 ausdehnt, wird eine Kraft auf das Stellglied 36 ausgeübt. Das Stellglied 36 ist über eine Kontereinrichtung 76, die in Fig. 2 in Form zweier elastischer Federn angedeutet ist, verrastet. Übersteigt die auf das Stellglied 36 durch den Druck im Arbeitsraum 52 ausgeübte Kraft die Rastkraft des Stellgliedes 36, so wird dieses verschoben und nimmt die alternativ mögliche Stellung ein.

In dieser in Fig. 2 nicht dargestellten, alternativ möglichen Stellung des Stellgliedes 36 ist die Druckseite 20 der Förderpumpe über einen Kanal 82 und die Drossel 58 nun mit dem Rezipienten 12 verbunden. Der zuvor befüllte Rezipient 10 ist in dieser Stellung durch einen Kanal 84 im Stellglied 36 mit der Saugseite der Förderpumpe verbunden. Der zuvor gefüllte Rezipient 10 wird durch die Förderpumpe 22 aktiv entleert und das Arbeitsfluid wird dem Rezipienten 12 zugeführt. Gleichzeitig wird auch der Arbeitsraum 52 über die Verbindungsmittel 46 und den Kanal 84 im Stellglied 36 durch die Förderpumpe entleert.

Ein Teil des von der Förderpumpe beförderten Arbeitsfluids wird über die Verbindungsmittel 62 und die Verzögerungsdrossel 64 dem Arbeitsraum 66 zugeführt. Der Druck in dem zweiten Arbeitsraum 66 steigt nun gemäß der Einstellung der Drossel 64 an, während der Rezipient 12, der in dem beschriebenen Fall ein weiteres aufblasbares Luftkissen sein mag, aufgepumpt wird. Über eine entsprechende Vorrichtung 86, beispielsweise eine Membran wird der ansteigende Druck im Arbeitsraum 66 auf das pneumatische Stellglied 36 übertragen, so dass daraus eine Kraft entgegen der Federkraft der Konterfeder 76 resultiert. Ist diese Kraft hinreichend groß, um die Rastkraft des Stellgliedes 36 aufgrund der Kontereinrichtung 76 zu überwinden, hat sich also im Arbeitsraum 66 ein genügend hoher Druck aufgebaut, so wird das Stellglied wieder in seine erste, in Fig. 2 dargestellte Stellung zurückgeschoben, so dass der zweite Rezipient 12 nun wieder, mit der Saugseite der Förderpumpe 22 verbunden, aktiv entleert wird.

Damit ist ein vollständiger Zyklus des erfindungsgemäßen Verfahrens zur alternierenden Beaufschlagung mindestens zweier Rezipienten eines pneumatischen Systems mit einem Druckmittelstrom abgeschlossen und das System beginnt wieder selbstständig mit der Füllung des Rezipienten 10 wie bereits oben beschrieben.

Durch das wechselseitige Befüllen bzw. Entleeren der beteiligten Luftkissen lässt sich mit einem auf dieser Erfindung basierenden System im Sitz eines Kraftfahrzeuges der Sitzkomfort verbessern und eine Entlastung der Wirbelsäule durch einen sich einstellenden Massageeffekt erreichen. Die Frequenz dieser Bewegung kann über die Einstellung der relativen Drosselgrößen 64 bzw. 48, der Größe der beteiligten Volumina und nicht zuletzt auch über den geförderten Druckmittelstrom eingestellt werden. Über die direkte Einstellung der Stärke der Kontervorrichtung 76 ist es beispielsweise auch dem Nutzer selbst leicht möglich, die Frequenz der Bewegung individuell anzupassen.

Zur Umwälzung des Arbeitsfluids der Vorrichtung kann ein Kleinkompressor, beispielsweise eine Flügelzellenpumpe oder auch eine Membranpumpe eingesetzt werden.

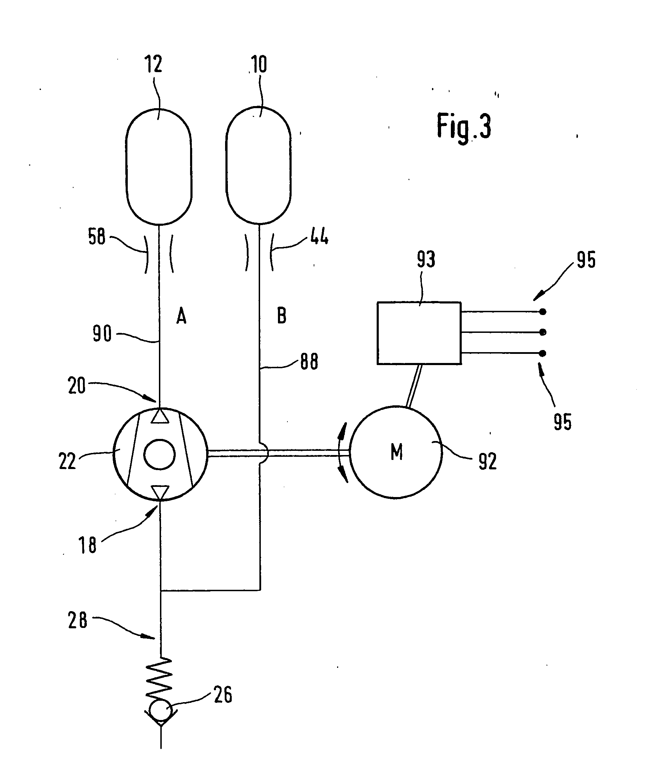

Fig. 3 zeigt ein alternatives Ausführungsbeispiel eines erfindungsgemäßen pneumatischen Systems, das es auf einfache Weise ermöglicht, eine alternierende Beaufschlagung zumindestens zweier Rezipienten eines pneumatischen Systems mit einem Druckmittelstrom zu realisieren. Ein erster Rezipient 10 ist über eine Drossel 44 und Verbindungsmittel 88 mit der Saugseite 18 einer Förderpumpe 22 verbunden. Die Druckseite 20 der Pumpe22 ist wiederum über Verbindungsmittel 90 und eine Drossel 58 mit einem zweiten Rezipienten 12 verbunden. Bis auf ein Ausgangsventil 26, welches über Verbindungsmittel 28 mit der Saugseite 18 der Förderpumpe verbunden ist, stellt das erfindungsgemäße pneumatische System somit ein geschlossener Kreis dar. Über das Ausgangsventil 26 ist es, in schon beschriebener Weise, möglich, Luft oder ein anderes Arbeitsfluid von außen in das System zuzuführen. So kann beispielsweise bei Erreichen einer bestimmten Druckgrenze auf der Saugseite 18 der Förderpumpe 22 das Ventil 26, welches beispielsweise als Rückschlagventil ausgestaltet sein kann, geöffnet werden.

Im Ausführungsbeispiel gemäß Fig. 3 ist das wechselseitige Befüllen der beiden Rezipienten auf einfache Weise durch eine Drehrichtungsumkehr der Förderpumpe 22, die beispielsweise in Form einer Flügelzellenpumpe ausgeführt sein kann, möglich. Auf diese Weise werden alternierend Druck- und Saugseite der Förderpumpe vertauscht und die Rezipienten entsprechend befüllt oder entleert. Über ein entsprechendes Steuergerät 93 kann der die Förderpumpe 22 antreibende Motor 92 geregelt werden. So kann beispielsweise über die Laufzeit der Förderpumpe der in den Rezipienten zu erreichende Enddruck geregelt werden und durch eine entsprechende Drehrichtungsumkehr des Elektromotors die Frequenz der alternierenden Druckmittelbeaufschlagüng variiert werden. Dem Pumpensteuergerät 93, welches beispielsweise Bestandteil eines übergeordneten Steuergerätes sein kann, können dazu Informationen diverser Sensoren 95, beispielsweise Sensoren für das Gewicht, die Körpergröße oder Umgebungsparametern wie beispielsweise der Fahrzeuginnenraumtemperatur zugeführt werden. Durch entsprechende, im Steuergerät des Elektromotors 92 abgelegte Kennlinien kann eine nutzer- und fahrsituationspezifische Ansteuerung des pneumatischen Systems realisiert werden. So kann beispielsweise dem Effekt Rechnung getragen werden, dass bei einer starken Aufreizung des Fahrzeuginnenraumes der Druck in den Rezipienten durch eine thermische Ausdehnung des Arbeitsfluids steigen kann. Auch können verschiedene Massageprogramme über entsprechende Kennlinien im Steuergerät abgelegt sein und beispielsweise durch ein entsprechendes Bedienelement durch den Fahrzeugnutzer bzw. die Fahrzeuginsassen abgerufen werden.

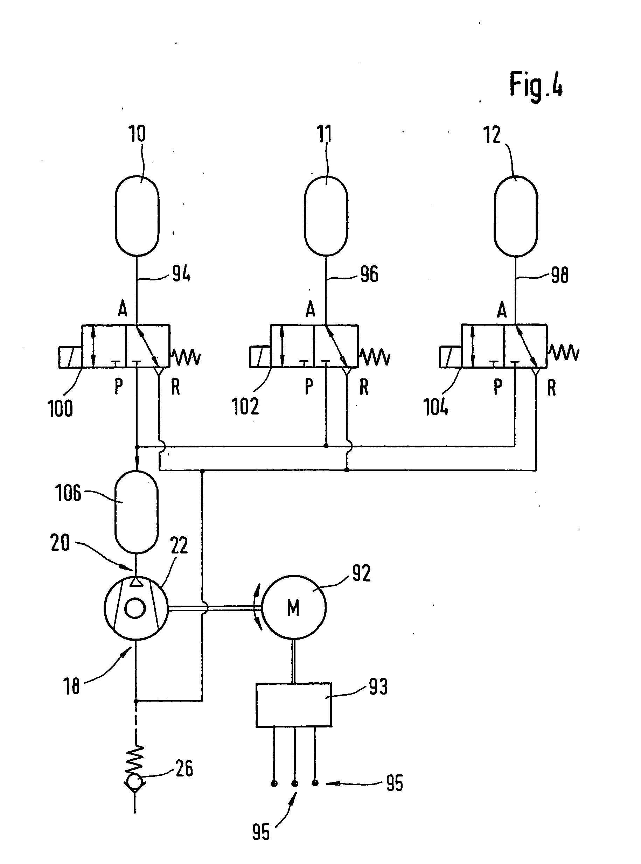

Fig. 4 zeigt ein weiteres Ausführungsbeispiel einer erfindungsgemäßen pneumatischen Schaltung, bei der mehr als die mindestens zwei Rezipienten zum Einsatz kommen. Die dargestellten drei Rezipienten stehen stellvertretend für jede mögliche Anzahl von Rezipienten, die ein solches pneumatisches System umfassen kann und sollen keine Beschränkung der Allgemeinheit der erfindungsgemäßen pneumatischen Schaltung darstellen.

Im Ausführungsbeispiel der Fig. 4 sind drei Rezipienten 10, 11 und 12 über entsprechende Verbindungsmittel 94, 96 und 98 mit jeweils einem Stellglied 100, 102 bzw. 104 verbunden. Die Stellglieder, die beispielsweise pneumatische Stellglieder gemäß dem Ausführungsbeispiel in Fig. 2 sein können, verbinden in ihrer, in Fig. 4 dargestellten Stellung die Rezipienten 10, 11 bzw. 12 mit der Saugseite 18 einer Förderpumpe 22. Dabei sind die Stellglieder in Fig. 4 derart gestellt, dass alle drei Rezipienten 10, 11, 12 gleichzeitig durch die Förderpumpe 22 entleert werden. Eine alternative Schaltung der Stellglieder ist selbstverständlich ebenso möglich, bei der beispielsweise eine gewisse Anzahl von Rezipienten aktiv entleert wird, während eine andere Anzahl der vorhandenen Rezipienten gleichzeitig durch die Förderpumpe mit dem Arbeitsfluid beaufschlagt wird. Die Stellglieder der erfindungsgemäßen pneumatischen Schaltung von denen in Fig. 4 exemplarisch lediglich drei gezeigt sind, können durch entsprechende Schaltprogramme synchron bzw. asynchron zueinander geschaltet werden. Auf diese Weise ist es möglich unterschiedliche Massageprogramme mit einer konstanten Anzahl von Rezipienten im pneumatischen System zu realisieren. In dem Ausführungsbeispiel gemäß Fig. 4 werden die Rezipienten 10, 11 bzw. 12 durch den Wechsel der Stellglieder in ihre zweite mögliche Position mit der Druckseite 20 der Förderpumpe verbunden, so dass das Arbeitsmittelfluid in der zweiten Stellung der Stellglieder 10, 11 bzw. 12 in die Rezpienten gepumpt wird. Die Druckseite der Förderpumpe mag dazu beispielsweise auch einen Vorratsrezipienten 106 aufweisen, der durch die Förderpumpe mit dem Arbeitsmittel befüllt wird und über ein entsprechendes Ventilelement das Arbeitsfluid an die mit der Druckseite der Förderpumpe verbundenen Rezipienten weitergeben kann.

Das erfindungsgemäße Verfahren zur alternierenden Beaufschlagung eines pneumatischen Systems mit einem Druckmittelstrom bzw. die entsprechende pneumatische Schaltung zur Durchführung dieses Verfahrens sind nicht auf die in den Figuren dargestellten Ausführungsbeispiele beschränkt. Insbesondere sind das Verfahren bzw. die zugehörige Vorrichtung nicht beschränkt auf die Verwendung von Luft als Arbeitsmittel. Auch wenn Luft als leicht verfügbares und daher kostengünstiges Arbeitsmittel bevorzugt wird, sind andere gasförmige Arbeitsfluide ebenso möglich. Die Verwendung von Wasser oder anderen flüssigen Arbeitsfluiden birkt das Problem, dass ein Leck im System zu einer Durchfeuchtung des Fahrzeugsitzes führen kann, so dass von einer Verwendung von flüssigen Arbeitsfluiden abzusehen ist.

Das erfindungsgemäße Verfahren bzw. die entsprechende pneumatische Schaltung sind nicht beschränkt auf die Anwendung in einem Massagesystem und insbesondere nicht beschränkt auf den Einsatz in den Fahrzeugsitzen eines Kraftfahrzeuges. Vielmehr kann ein solches pneumatisches System in einer Vielzahl von technischen Anwendungen eingesetzt werden.

## Patentansprüche

1. Verfahren zur alternierenden Beaufschlagung mindestens zweier Rezipienten (10,11,12) eines pneumatischen Systems, insbesondere eines pneumatischen Massage-Systems eines Kraftfahrzeugsitzes, mit einem Druckmittelstrom, **dadurch gekennzeichnet, dass** zumindest ein als Rezipient (10,11,12) dienendes erstes Luftkissen (10,11,12) mit einem gasförmigen Arbeitsfluid gefüllt wird, während das Arbeitsfluid aus mindestens einem weiteren, zweiten Luftkissen (10,11,12) aktiv abgesaugt wird.

2. Verfahren nach Anspruch 1, **dadurch gekennzeichnet, dass** der Druck in dem mindestens einen, zu leerenden Rezipienten (10,11,12) zur Befüllung des mindestens einen, zu befüllenden Luftkissens (10,11,12) verwendet wird.

3. Verfahren nach Anspruch 1 oder 2, **dadurch gekennzeichnet, dass** die wechselseitige Befüllung zumindest zweier Luftkissen (10,11,12) durch eine Drehrichtungsumkehr einer das Arbeitsfluid fördernden Pumpe (22) erreicht wird.

4. Verfahren nach Anspruch 3, **dadurch gekennzeichnet, dass** die Motordrehzahl eines die Förderpumpe (22) antreibenden Motors, insbesondere eines Elektromotors (24,92), vorgebbar ist.

5. Verfahren nach einem der vorhergehenden Ansprüche, **dadurch gekennzeichnet, dass** der Enddruck in dem mindestens einen, zu füllenden Rezipienten (10,11,12) und/oder die Frequenz der alternierenden Beaufschlagung der mindestens zwei Rezipienten (10,11,12) mit dem Arbeitsfluid vorgebar sind/ist.

6. Verfahren nach Anspruch 5, **dadurch gekennzeichnet, dass** der Enddruck in dem mindestens einen, zu füllenden Rezipienten (10,11,12) und /oder die Frequenz der alternierenden Beaufschlagung der mindestens zwei Rezipienten (10,11,12) mit dem Arbeitsfluid manuell über entsprechende Bedienelemente im Fahrzeug vorgebar sind/ist.

7. Verfahren nach Anspruch 5, **dadurch gekennzeichnet, dass** der Enddruck in dem mindestens einen, zu füllenden Rezipienten (10,11,12) und /oder die Frequenz der alternierenden Beaufschlagung der mindestens zwei Rezipienten (10,11,12) mit dem Arbeitsfluid durch ein Steuergerät (93) entsprechend den Signalen mindestens eines Sensors (95), insbesondere eines Sensors zur Detektion der Sitzbelegung vorgegeben wird.

8. Verfahren nach einem der Ansprüche 5, 6 oder 7, **dadurch gekennzeichnet, dass** der Enddruck in dem mindestens einen, zu füllenden Rezipienten (10,11,12) und /oder die Frequenz der alternierenden Beaufschlagung der mindestens zwei Rezipienten (10,11,12) mit dem Arbeitsfluid durch eine Drosselung (34,44,58) des Druckmittelstromes auf der Druckseite (20) der Förderpumpe (22), insbesondere durch ein Drosselventil (34,44,58) gesteuert beziehungsweise geregelt wird.

9. Verfahren nach einem der Ansprüche 5, 6 oder 7, **dadurch gekennzeichnet, dass** der Enddruck in dem mindestens einen, zu füllenden Luftkissen (10,11,12) und /oder die Frequenz der alternierenden Beaufschlagung der mindestens zwei Rezipienten (10,11,12) mit dem Arbeitsfluid durch Betätigung eines Bypasses (32) zwischen der Saug- (18) und Druckseite (20) der Förderpumpe (22) gesteuert beziehungsweise geregelt wird.

10. Pneumatische Schaltung zur alternierenden Beaufschlagung von Rezipienten (10,11,12) eines pneumatischen Systems, insbesondere eines pneumatischen Massage-Systems eines Fahrzeugsitzes mit einem Druckmittelstrom, mit mindestens zwei Rezipienten (10,11,12) zur wechselseitigen Aufnahme des Druckmittelstromes, mit zumindest einer, den Druckmittelstrom fördernden Pumpe (22) sowie mit Antriebsmitteln (24) für die Förderpumpe (22) und mit Verbindungsmitteln (14,16,18,20,88,90,94,96,98) zwischen der Förderpumpe (22) und den mit einem Arbeitsfluid zu beaufschlagenden Rezipienten (10,121,12), **dadurch gekennzeichnet, dass** der mindestens eine, erste Rezipient (10,11,12) über die Verbindungsmittel (14,16,18,20,88,90,94,96,98) und die Förderpumpe (22) mit dem mindestens einen zweiten Rezipienten (10,11,12) verbunden ist.

11. Pneumatische Schaltung nach Anspruch 10, **dadurch gekennzeichnet, dass** die mindestens zwei Rezipienten (10,11,12) über die Verbindungsmittel (14,16,18,20,88,90,94,96,98) derart mit der mindestens einen Förderpumpe (22) verbunden sind, dass das aus dem mindestens einen, ersten Rezipienten (10,11,12) abgepumpte Arbeitsfluid dem mindestens, zweiten Rezipienten (10,11,12) zuführbar ist.

12. Pneumatische Schaltung nach Anspruch 10 oder 11, **dadurch gekennzeichnet, dass** die Ansaugseite (18) der mindestens einen Förderpumpe (22) mit mindestens einem ersten Rezipienten (10,11,12) verbunden ist, während gleichzeitig die Druckseite (20) der Förderpumpe (22) mit mindestens einem zweiten Rezipienten (10,11,12) verbunden ist.

13. Pneumatische Schaltung nach einem der vorhergehenden Ansprüche 10, 11 oder 12, **dadurch gekennzeichnet, dass** die Ansaugseite (18) der Förderpumpe (22) über ein, den Druckmittelstrom steuerndes Bauelement (36,100,102,104) mit mindestens einem ersten Rezipienten (10,11,12) verbunden ist, während die Druckseite (20) der Pumpe (22) gleichzeitig mit mindestens einem zweiten Rezipienten (10,11,12) verbunden ist.

14. Pneumatische Schaltung nach Anspruch 13, **dadurch gekennzeichnet, dass** die Druckseite (20) der Förderpumpe (22) zudem mit demselben, den Druckmittelstrom steuernden Bauelement (36,100,102,104) verbunden ist.

15. Pneumatische Schaltung nach Anspruch 13 oder 14, **dadurch gekennzeichnet, dass** das Drucksteuermittel (36,100,102,104) ein pneumatisch getriebenes Stellglied (36,100,102,104) aufweist.

16. Pneumatische Schaltung nach Anspruch 15, **dadurch gekennzeichnet, dass** das Drucksteuermittel (36,100,102,104) zumindest ein Ventil aufweist.

17. Pneumatische Schaltung nach einem der vorhergehenden Ansprüche 10 bis 16, **dadurch gekennzeichnet, dass** die Förderpumpe (22) eine Flügelzellenpumpe, insbesondere eine Flügelzellenpumpe mit Mitteln zur Drehrichtungsumkehr ist.

18. Pneumatische Schaltung nach einem der vorhergehenden Ansprüche 10 bis 17, **dadurch gekennzeichnet, dass** die Schaltung mindestens ein Ausgangsventil (26) aufweist, welches bei Erreichung einer bestimmten Druckgrenze auf der Saugseite (18) der Pumpe (22) eine Verbindungsleitung (28, 14,18,88) öffnet, um zusätzliches Arbeitsfluid dem System zuzuführen.

19. Pneumatische Schaltung nach einem der vorhergehenden Ansprüche 10 bis 18, **dadurch gekennzeichnet, dass** die Schaltung mindestens ein Sensorelement (95) aufweist, welches Informationen über eine Sitzbelegung gewinnt und diese Informationen an ein Steuergerät (93) für die pneumatische Schaltung übermittelt.

20. Verfahren zur Beaufschlagung zumindest zwei, in einem Fahrzeugsitz integrierten Rezipienten (10,11,12) zur alternierenden Beaufschlagung mit einem Druckmittelstrom, **dadurch gekennzeichnet**, das die Beaufschlagung der Rezipienten (10,11,12) gemäß einem Verfahren nach einem der Ansprüche 1 bis 9 erfolgt.

## Claims

1. Method for the alternating charging of at least two receptacles (10, 11, 12) of a pneumatic system, in particular a pneumatic massage system of a motor vehicle seat, with a stream of pressure medium, **characterized in that** at least one first air cushion (10, 11, 12) serving as a receptacle (10, 11, 12) is filled with a gaseous working fluid while the working fluid is actively sucked off from at least one further, second air cushion (10, 11, 12).

2. Method according to Claim 1, **characterized in that** the pressure in the at least one receptacle (10, 11, 12) to be emptied is used for filling the at least one air cushion (10, 11, 12) to be filled.

3. Method according to Claim 1 or 2, **characterized in that** the alternating filling of at least two air cushions (10, 11, 12) is achieved by reversing the direction of rotation of a pump (22) delivering the working fluid.

4. Method according to Claim 3, **characterized in that** the rotational speed of a motor driving the feed pump (22), in particular an electric motor (24, 92), can be predetermined.

5. Method according to one of the preceding claims, **characterized in that** the final pressure in the at least one receptacle (10, 11, 12) to be filled and/or the frequency of the alternating charging of the at least two receptacles (10, 11, 12) with the working fluid can be predetermined.

6. Method according to Claim 5, **characterized in that** the final pressure in the at least one receptacle (10, 11, 12) to be filled and/or the frequency of the alternating charging of the at least two receptacles (10, 11, 12) with the working fluid can be predetermined manually via corresponding operating elements in the vehicle.

7. Method according to Claim 5, **characterized in that** the final pressure in the at least one receptacle (10, 11, 12) to be filled and/or the frequency of the alternating charging of the at least two receptacles (10, 11, 12) with the working fluid is/are predetermined by a control device (93) in accordance with the signals from at least one sensor (95), in particular a sensor for detecting the seat occupancy.

8. Method according to one of Claims 5, 6 or 7, **characterized in that** the final pressure in the at least one receptacle (10, 11, 12) to be filled and/or the frequency of the alternating charging of the at least two receptacles (10, 11, 12) with the working fluid is controlled or regulated by a throttling (34, 44, 58) of the stream of pressure medium on the delivery side (20) of the feed pump (22), in particular by means of a throttle valve (34, 44, 58).

9. Method according to one of Claims 5, 6 or 7, **characterized in that** the final pressure in the at least one air cushion (10, 11, 12) to be filled and/or the frequency of the alternating charging of the at least two receptacles (10, 11, 12) with the working fluid is/are controlled or regulated by actuation of a bypass (32) between the intake side (18) and the delivery side (20) of the feed pump (22).

10. Pneumatic circuit for the alternating charging of receptacles (10, 11, 12) of a pneumatic system, in particular a pneumatic massage system of a vehicle seat, with a stream of pressure medium, with at least two receptacles (10, 11, 12) for receiving the stream of pressure medium in an alternating manner, with at least one pump (22) delivering the stream of pressure medium, and with driving means (24) for the feed pump (22) and with connecting means (14, 16, 18, 20, 88, 90, 94, 96, 98) between the feed pump (22) and the receptacle (10, 11, 12) to be charged with a working fluid, **characterized in that** the at least one first receptacle (10, 11, 12) is connected to the at least one second receptacle (10, 11, 12) via the connecting means (14, 16, 18, 20, 88, 90, 94, 96, 98) and the feed pump (22).

11. Pneumatic circuit according to Claim 10, **characterized in that** the at least two receptacles (10, 11, 12) are connected to the at least one feed pump (22) via the connecting means (14, 16, 18, 20, 88, 90, 94, 96, 98) in such a manner that the working fluid pumped out of the at least one first receptacle (10, 11, 12) can be supplied to the at least one second receptacle (10, 11, 12).

12. Pneumatic circuit according to Claim 10 or 11, **characterized in that** the intake side (18) of the at least one feed pump (22) is connected to at least one first receptacle (10, 11, 12) while at the same time the delivery side (20) of the feed pump (22) is connected to at least one second receptacle (10, 11, 12).

13. Pneumatic circuit according to one of the preceding Claims 10, 11 or 12, **characterized in that** the intake side (18) of the feed pump (22) is connected to at least one first receptacle (10, 11, 12) via a component (36, 100, 102, 104) which controls the stream of pressure medium, while the delivery side (20) of the pump (22) is at the same time connected to at least one second receptacle (10, 11, 12).

14. Pneumatic circuit according to Claim 13, **characterized in that** the delivery side (20) of the feed pump (22) is also connected to the same component (36, 100, 102, 104) which controls the stream of pressure medium.

15. Pneumatic circuit according to Claim 13 or 14, **characterized in that** the pressure control means (36, 100, 102, 104) has a pneumatically driven actuating element (36, 100, 102, 104).

16. Pneumatic circuit according to Claim 15, **characterized in that** the pressure control means (36, 100, 102, 104) has at least one valve.

17. Pneumatic circuit according to one of the preceding Claims 10 to 16, **characterized in that** the feed pump (22) is a vane pump, in particular a vane pump with means for reversing the direction of rotation.

18. Pneumatic circuit according to one of the preceding Claims 10 to 17, **characterized in that** the circuit has at least one output valve (26) which, when a certain pressure limit is reached on the intake side (18) of the pump (22), opens a connecting line (28, 14, 18, 88) in order to supply additional working fluid to the system.

19. Pneumatic circuit according to one of the preceding Claims 10 to 18, **characterized in that** the circuit has at least one sensor element (95) which obtains information about a seat occupancy and transmits said information to a control device (93) for the pneumatic circuit.

20. Method for charging at least two receptacles (10, 11, 12), which are integrated in a vehicle seat, for the alternating charging with a stream of pressure medium, **characterized in that** the charging of the receptacles (10, 11, 12) takes place in accordance with a method according to one of Claims 1 to 9.

## Revendications

1. Procédé pour alimenter en alternance au moins deux récipients (10, 11, 12) d'un système pneumatique, notamment d'un système de massage pneumatique d'un siège de véhicule automobile avec un flux d'agent sous pression,
**caractérisé en ce qu'**
au moins l'un des réceptacles (10, 11, 12) servant de premier coussin à air (10, 11, 12) est rempli d'un fluide actif à l'état gazeux alors que le fluide actif est aspiré activement d'au moins un autre second coussin à air (10, 11, 12).

2. Procédé selon la revendication 1,
**caractérisé en ce qu'**
on utilise la pression dans au moins l'un des récipients (10, 11, 12) à vider pour remplir au moins un coussin d'air (10, 11, 12) à charger.

3. Procédé selon la revendication 1 ou 2,
**caractérisé en ce qu'**
on réalise le remplissage alterné d'au moins un coussin d'air (10, 11, 12) en inversant le sens de rotation d'une pompe (22) débitant le fluide actif.

4. Procédé selon la revendication 3,
**caractérisé en ce que**
la vitesse de rotation d'un moteur entraînant la pompe de refoulement (22) et notamment d'un moteur électrique (24, 92) est prédéfinie.

5. Procédé selon l'une des revendications précédentes,
**caractérisé en ce que**
la pression finale dans au moins l'un des récipients à remplir (10, 11, 12) et/ou la fréquence de la sollicitation alternée au moins des deux récipients (10, 11, 12) avec du fluide actif est ou sont prédéfinis.

6. Procédé selon la revendication 5,
**caractérisé en ce que**
la pression finale dans au moins l'un des récipients à remplir (10, 11, 12) et/ou la fréquence de l'alimentation alternée au moins des deux récipients (10, 11, 12) avec du fluide actif sont/est prédéfinie manuellement par des éléments de manoeuvre correspondants équipant le véhicule.

7. Procédé selon la revendication 5,
**caractérisé en ce qu'**
on prédéfinit la pression finale dans au moins l'un des récipients (10, 11, 12) à remplir et/ou la fréquence de l'alimentation alternée au moins des deux récipients (10, 11, 12) avec du fluide actif par un appareil de commande (93) en fonction des signaux d'au moins un capteur (95), notamment d'un capteur de détection d'occupation des sièges.

8. Procédé selon l'une des revendications 5, 6 ou 7,
**caractérisé en ce qu'**
on commande ou régule la pression finale dans au moins l'un des récipients à remplir (10, 11, 12) et/ou la fréquence de l'alimentation alternée au moins des deux récipients (10, 11, 12) avec du fluide actif par un moyen d'étranglement (34, 44, 58) du flux d'agent sous pression du côté pression (20) de la pompe de refoulement (22), notamment par une soupape d'étranglement (34, 44, 58).

9. Procédé selon l'une des revendications 5, 6 ou 7,
**caractérisé en ce qu'**
on commande ou régule la pression finale dans au moins un coussin d'air (10, 11, 12) à remplir et/ou la fréquence de l'alimentation alternée au moins des deux récipients (10, 11, 12) avec du fluide de travail par l'actionnement d'une dérivation (32) entre le côté aspiration (18) et le côté pression (côté refoulement) (20) de la pompe de refoulement (22).

10. Circuit pneumatique pour l'alimentation alternée de récipients (10, 11, 12) d'un système pneumatique, notamment d'un système de massage pneumatique d'un siège de véhicule avec un fluide d'agent sous pression comportant au moins deux récipients (10, 11, 12) pour recevoir en alternance le débit de fluide sous pression, au moins une pompe (22) refoulant du fluide sous pression ainsi que des moyens d'entraînement (24) de la pompe de refoulement (22) et des moyens de liaison (14, 16, 18, 20, 88, 90, 94, 96, 98) entre la pompe de refoulement (22) et les récipients (10, 121, 12) à alimenter en fluide actif,
**caractérisé en ce qu'**
au moins l'un des récipients, le premier récipient (10, 11, 12) est relié par les moyens de liaison (14, 16, 18, 20, 88, 90, 94, 96, 98) et la pompe de refoulement (22) avec au moins un second récipient (10, 11, 12).

11. Circuit pneumatique selon la revendication 10,
**caractérisé en ce qu'**
au moins les deux récipients (10, 11, 12) sont reliés par des moyens de liaison (14, 16, 18, 20, 88, 90, 94, 96, 98), avec au moins une pompe de refoulement (22) de façon qu'à partir d'au moins le premier récipient (10, 11, 12), le fluide actif pompé soit fourni au moins au second récipient (10, 11, 12).

12. Circuit pneumatique selon la revendication 10 ou 11,
**caractérisé en ce que**
le côté aspiration (18) au moins d'une pompe d'aspiration (22) est relié à au moins un premier des récipients (10, 11, 12) alors qu'en même temps le côté refoulement (côté de pression) (20) de la pompe de refoulement (22) est relié au moins avec un second récipient (10, 11, 12).

13. Circuit pneumatique selon l'une des revendications précédentes (10, 11, 12),
**caractérisé en ce que**
le côté aspiration (18) de la pompe de refoulement (22) est relié par un composant (36, 100, 102, 104) commandant le débit de fluide sous pression avec au moins un premier récipient (10, 11, 12) alors que le côté de refoulement (côté pression) (20) de la pompe (22) est en même temps relié à au moins un second récipient (10, 11, 12).

14. Circuit pneumatique selon la revendication 13,
**caractérisé en ce que**
le côté refoulement (côté pression) (20) de la pompe de refoulement (22) est en outre relié au même composant (36, 100, 102, 104) qui commande le débit de fluide sous pression.

15. Circuit pneumatique selon la revendication 13 ou 14,
**caractérisé en ce que**
le moyen de commande de pression (36, 100, 102, 104) est un organe d'actionnement (36, 100, 102, 104) à commande pneumatique.

16. Circuit pneumatique selon la revendication 15,
**caractérisé en ce que**
le moyen de commande de pression (36, 100, 102, 104) comporte au moins une soupape.

17. Circuit pneumatique selon l'une des revendications précédentes 10 à 16,
**caractérisé en ce que**
la pompe de refoulement (22) est une pompe à alvéoles et ailette, notamment pompe à alvéole et ailette comportant des moyens d'inversion de sens de rotation.

18. Circuit pneumatique selon l'une des revendications précédentes 10 à 17,
**caractérisé en ce que**
le circuit comporte au moins une soupape de sortie (26) qui, lorsqu'on atteint une certaine limite de pression du côté aspiration (18) de la pompe (22), ouvre une conduite de liaison (28, 14, 18, 88) pour assurer une alimentation supplémentaire de fluide actif dans le système.

19. Circuit pneumatique selon l'une des revendications précédentes 10 à 18,
**caractérisé en ce que**
le circuit comporte au moins un élément de capteur (95) qui recueille des informations concernant une occupation de siège et transmet ces informations à un appareil de commande (93) du circuit pneumatique.

20. Procédé d'alimentation d'au moins deux récipients (10, 11, 12) intégrés dans un siège de véhicule pour une alimentation alternée avec un débit d'agent sous pression,
**caractérisé en ce que**
l'alimentation des récipients (10, 11, 12) se fait selon un procédé suivant l'une des revendications 1 à 9.
